# EUROPÄISCHE PATENTSCHRIFT

(11) **EP 2 631 091 B1**
(45) Veröffentlichungstag und Bekanntmachung des Hinweises auf die Patenterteilung: **06.04.2016**
(21) Anmeldenummer: 13152120.5
(22) Anmeldetag: 22.01.2013
(51) Int. Cl.: B60C 11/12, B60C 11/03

(54) **Laufstreifenprofil eines Fahrzeugreifens**
Run strip profile of a vehicle tyre
Profil de bande de roulement d'un pneu de véhicule

(30) Priorität: 23.02.2012 DE 102012101447
(43) Veröffentlichungstag der Anmeldung: 28.08.2013
(73) Patentinhaber: Continental Reifen Deutschland GmbH, 30165 Hannover (DE)
(72) Erfinder: Pokutta-Paskaleva, Dr. Anastassia, 30161 Hannover (DE); Hoffmann, Dr. Jens, 40670 Meerbusch (DE)
(74) Vertreter: Finger, Karsten

(56) Entgegenhaltungen:
- EP-A2- 0 131 246
- EP-A2- 0 963 864
- WO-A1-2009/077808
- JP-A- H02 246 810
- JP-A- 2000 318 413

## Beschreibung

Die Erfindung betrifft ein Laufstreifenprofil eines Fahrzeugreifens, welches ein über den Umfang des Laufstreifens umlaufendes Profilband mit Feineinschnitten aufweist, wobei der Feineinschnitt das Profilband in axialer Richtung vollständig von der einen Profilblockkante zur anderen Profilblockkante durchquert und wobei der Feineinschnitt aus mehreren Abschnitten besteht, welche winklig zueinander angeordnet sind, wobei der Feineinschnitt in Aufsicht aus drei Abschnitten besteht, welche im Neuzustand derart zueinander angeordnet sind, dass der Feineinschnitt in etwa eine Z-Form aufweist, wobei der erste Abschnitt und der dritte Abschnitt die beiden äußeren Abschnitte des Feineinschnittes bilden und in etwa in axialer Richtung angeordnet sind sowie wobei der zweite Abschnitt den mittigen Abschnitt des Feineinschnittes bildet.

Ein derartiges Laufstreifenprofil eines Fahrzeugreifens ist aus der EP 0 963 864 A2 bekannt geworden.

Feineinschnitte dienen beispielsweise bei Nutzfahrzeugreifen dazu, bei nasser Fahrbahn den Wasserfilm zu zertrennen, um bessere Nasseigenschaften dieses Laufstreifens zu erhalten.

Die EP 0 963 864 A2 offenbart ein Laufstreifenprofil mit Feineinschnitten, welche in Reifenumfangsrichtung geneigt sind und um zumindest eine radial verlaufende Verwindungsachse in sich verwunden sind. Die JP 2000 318413 A offenbart Feineinschnitte für ein Laufstreifenprofil, welche in Aufsicht unterschiedliche, miteinander in Verbindung stehende Abschnitte aufweisen. Bestimmte der vorgenannten Abschnitte weisen einen von der radialen Richtung abweichenden Tiefenverlauf auf. Die JP H02 246810 A offenbart Profilblöcke mit Feineinschnitten, wobei die Feineinschnitte an der Profilblockoberfläche eine geringere Länge als im Feineinschnittgrund aufweisen. Im Feineinschnittgrund ist der Feineinschnitt beispielsweise s-förmig ausgebildet, während er an der Oberfläche eine Gerade darstellt. Die WO 2009/077808 A1 offenbart einen in Aufsicht omegaförmigen Feineinschnitt, der über seinen Tiefenverlauf seine omegaförmige Geometrie ändert.
Die DE 1 168 789 hat ein Laufstreifenprofil zum Gegenstand, welches aus über den Umfang umlaufenden Profilbändern besteht. Jedes Profilband ist seitlich durch je eine Umfangsrille begrenzt. Die Profilbänder weisen Feineinschnitte auf, die in axialer Richtung das Profilband vollständig durchlaufen und die sich von der Laufstreifenperipherie nach radial innen erstrecken. Jeder Feineinschnitt besteht durchgängig aus mehreren winklig zueinander angeordneten Abschnitten, welche abwechselnd in etwa in axialer Richtung und in etwa in Umfangsrichtung angeordnet sind.

Eine derartige Ausbildung der Feineinschnitte bewirkt, dass Querkräfte gut aufgenommen werden können und dass eine gute Nassperformance auf hoch-µ-Straßenoberflächen erhaltbar ist. Die zickzack-förmig ausgebildeten Feineinschnitte erlauben eine hierfür vorteilhafte Verschränkung bzw. Abstützung der gegenüberliegenden Feineinschnittwände und somit der durch die Feineinschnitte in Abschnitte gegliederten Profilbandabschnitte.

Diese Verschränkung ist insbesondere im Neuzustand des Laufstreifenprofils von Vorteil, da die Profiltiefe hoch ist und eine hohe Beweglichkeit der Profilbandabschnitte gegeben ist. Die Verschränkung führt zu einer vorteilhaften Versteifung des Profilbandes bei Querkräften.

Im angefahrenen Zustand des Laufstreifenprofils sind die Profilbänder durch die geringere verbleibende Profiltiefe von sich aus bereits steifer als im Neuzustand. Eine weitere Versteifung durch Verschränkung ist dann unvorteilhaft.

Es ist die Aufgabe der Erfindung, ein Laufstreifenprofil eines Fahrzeugreifens zur Verfügung zu stellen, das über seine Lebensdauer ein gutes Handling als auch eine gute Nassperformance aufweist.

Gelöst wird die Aufgabe, indem der zweite Abschnitt in etwa in Umfangsrichtung angeordnet ist und indem die Geometrie des Feineinschnittes ab einer Profiltiefe von 3 mm bis 0,4 x td von der Geometrie des Neuzustandes abweicht, wobei td die maximale Profiltiefe ist, indem der erste und/oder der dritte Abschnitt einen von der radialen Richtung abweichenden Tiefenverlauf aufweisen und in Umfangsrichtung nach vom oder in Umfangsrichtung nach hinten verlaufend angeordnet sind, so dass der erste Abschnitt und der dritte Abschnitt im Feineinschnittgrund auf einer gemeinsamen Gerade angeordnet sind.

Es ist erfindungsgemäß ein Laufstreifenprofil geschaffen, das im Neuzustand-in Aufsicht auf einen Feineinschnitt- durch eine z-förmige Ausbildung der Feineinschnitte gut Querkräfte aufnehmen kann und eine gute Nassperformance auf hoch-µ-Oberflächen aufweist. Denn die z-förmige Ausbildung des Feineinschnittes erlaubt eine Verschränkung der Profilbandabschnitte bei Querkräften, welche zu der vorteilhaften Versteifung des Profilbandes führt.
Im Tiefenverlauf weist der Feineinschnitt eine vom Neuzustand abweichende Geometrie auf. Über den Tiefenverlauf wird die bei Querkräften verschränkend wirkende Geometrie des Feineinschnittes kontinuierlich durch Änderung der Feineinschnittgeometrie verringert bzw. aufgelöst und ist derart an die stärkere Steifheit des weiter angefahrenen Laufstreifenprofils angepasst. Die Abweichung der Geometrie ab einer bestimmten Profiltiefe führt zu einer weiteren Versteifung der Profilelemente insbesondere unter radialen Kräften. Im Feineinschnittgrund liegen die Abschnitte des Feineinschnittes auf einer Gerade und haben keine verschränkende Wirkung mehr.

Es ist ein Laufstreifenprofil mit einem sogenannten "3D-Feineinschnitt" geschaffen, das über dessen Lebensdauer ein gutes Handling als auch eine gute Nassperformance aufweist.

"Axiale Richtung" meint die Richtung entlang der Reifenachse. "Umfangsrichtung" meint die Richtung entlang des Reifen- bzw. Laufstreifenabrollens. "Radiale Richtung" meint die Richtung vom Reifenmittelpuilkt zum Laufstreifen. "Feineinschnittgrund" meint Linie eines Feineinschnitts der dem Reifenmittelpunkt am nächsten ist.

"Breite des Feineinschnittes" meint die minimale Ausdehnung eines Feineinschnittes in Umfangsrichtung.
"Profiltiefe" oder "Feineinschnitttiefe" meint die maximale Differenz in radialer Richtung zwischen Elementen eines Profils bzw. eines Feineinschnittes.

Zweckmäßig ist es, wenn im Neuzustand der erste Abschnitt und der dritte Abschnitt je einen Winkel β von 5° bis 35° mit der axialen Richtung einschließen und dass der zweite Abschnitt einen Winkel α von -10° bis 10° mit der Umfangsrichtung einschließt. Durch diese Geometrie wird eine Verzahnung der Profilelemente eines Profilbändes unter Querkräften erreicht.

Vorteilhaft ist es, wenn der Feineinschnitt eine Breite von 0,5 mm bis 1,5 mm aufweist. Durch die Ausdehnung wird eine gegenseitige Verschiebung der Profilelemente des Profilbandes weitestgehend verhindert.

Vorteilhaft ist es, wenn der erste Abschnitt und der dritte Abschnitt gleich lang ausgebildet sind. Durch diese Geometrie ergibt sich gleichartiges Verhalten bei Kräften in und entgegen der axialen Richtung.

Vorteilhaft ist es, wenn der erste und/ oder der dritte Abschnitt in Änderung der Geometrie des Neuzustandes -im Querschnitt des Feineinschnittes betrachtet- einen Verlauf in Form einer Gerade aufweist. Diese Geometrie erzeugt lokal minimale Kerbspannungen.

Zweckmäßig ist es, wenn der erste und/ oder der dritte Abschnitt in Änderung der Geometrie des Neuzustandes -im Querschnitt des Feineinschnittes betrachtet- einen bogenförmigen, vorzugsweise mulitradialen Verlauf aufweist. Diese Geometrie erzeugt global minimale Kerbspannungen.

Ein derartiges Laufstreifenprofil ist in einem Fahrzeugreifen, vorzugsweise einen Nutzfahrzeugreifen einzusetzen.

Bei den in den Zeichnungen gezeigten Ausführungsbeispielen handelt es sich um schematische Darstellungen, die nicht unter den Gegenstand der Erfindung fallen. Diese Zeichnungen erleichtern das Verständnis der Erfindung Dabei zeigt die
Fig. 1 eine dreidimensionale Ansicht eines Laufstreifenprofils eines Fahrzeugreifens mit Feineinschnitten in den Profilbändern;
Fig. 2 eine Aufsicht auf einen Feineinschnitt im Neuzustand des Laufstreifenprofils;
Fig. 3 eine dreidimensionale Darstellung eines Feineinschnittes (Fig. 3a) und dessen Querschnitt (Fig. 3b);
Fig. 4 eine dreidimensionale Darstellung eines weiteren Feineinschnittes (Fig. 4a) und dessen Querschnitt (Fig. 4b);
Fig. 5 eine dreidimensionale Darstellung eines wiederum weiteren Feineinschnittes (Fig. 5a) und dessen Querschnitt (Fig. 5b);.

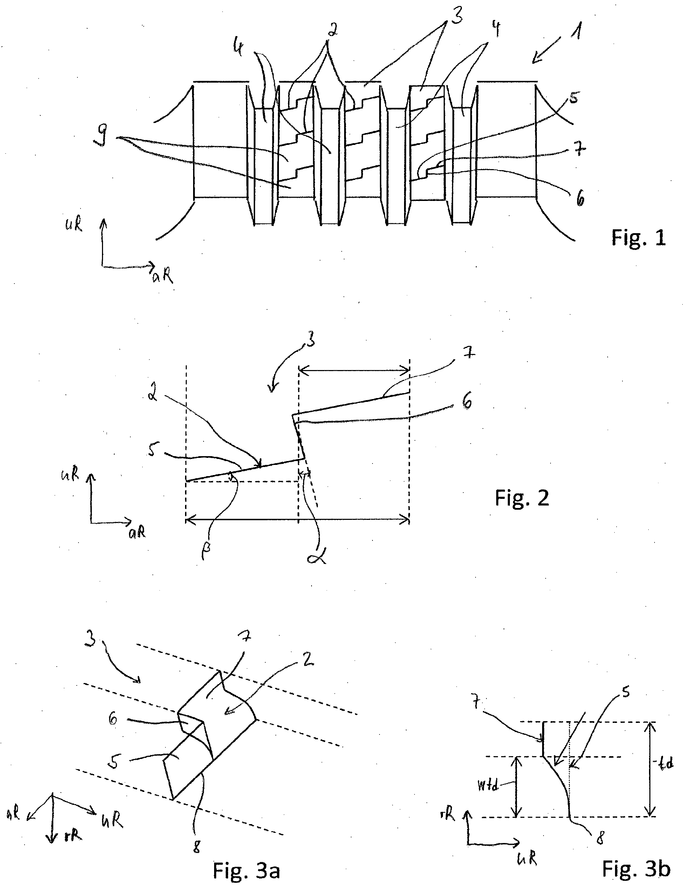

Die **Fig. 1** zeigt eine dreidimensionale Ansicht eines Laufstreifenprofils 1 eines Fahrzeugreifens mit Feineinschnitten 2 in den Profilbändern 3. Jedes Profilband 3 ist beidseitig von Umfangsrillen 4 begrenzt. Der Feineinschnitt 2 durchquert das Profilband 3 in axialer Richtung aR vollständig. Der Feineinschnitt 2 besteht aus drei Abschnitten 5, 6, 7, welche winklig zueinander angeordnet sind und in Aufsicht eine Z-Form bilden. Der erste Abschnitt 5 und der dritte Abschnitt 7 bilden die beiden äußeren Abschnitte des Feineinschnittes 2 und sind in etwa in axialer Richtung aR angeordnet. Der zweite Abschnitt 6 bildet den mittigen Abschnitt des Feineinschnittes 2 und ist in etwa in Umfangsrichtung uR angeordnet. Alle drei Abschnitte 5, 6, 7 sind derart angeordnet, dass sie einen durchgängigen Feineinschnitt 2 ohne Durchbrechungen oder Unterbrechungen bilden.

Die **Fig. 2** zeigt eine Aufsicht auf einen Feineinschnitt 2 im Neuzustand des Laufstreifenprofils. Der erste Abschnitt 5 und der dritte Abschnitt 7 bilden die beiden äußeren Abschnitte des Feineinschnittes 2 und sind in etwa in axialer Richtung aR angeordnet. Der zweite Abschnitt 6 bildet den mittigen Abschnitt des Feineinschnittes 2 und ist in etwa in Umfangsrichtung uR angeordnet. Der erste Abschnitt 5 und der dritte Abschnitt 7 schließen je einen Winkel β von 5° bis 35°, hier 12° mit der axialen Richtung aR ein. Der zweite Abschnitt 6 schließt einen Winkel α von -10° bis 10°, hier 0° mit der Umfangsrichtung uR ein.

Die **Fig. 3 bis 5** zeigen in der linken Blatthälfte eine dreidimensionale Darstellung eines in einem Profilband 3 angeordneten Feineinschnittes 2 und auf der rechten Blatthälfte dessen Querschnitt, wobei die durchgezogenen Linie den dritten Abschnitt 7 und die feinpunktierte Linie den ersten Abschnitt 5 darstellt. Das Profilband 3 ist grobpunktiert angedeutet.
Den Feineinschnitten 2 ist gemein, dass im angefahrenen Zustand des Laufstreifenprofiles der erste Abschnitt 5 und/oder der dritte Abschnitt 7 einen von der radialen Richtung rR abweichenden Tiefenverlauf aufweisen und in Umfangsrichtung uR nach vorn oder in Umfangsrichtung uR nach hinten verlaufend angeordnet sind, so dass der erste Abschnitt 5 und der dritte Abschnitt 7 im Feineinschnittgrund 8 auf einer gemeinsamen Gerade angeordnet sind.

Die **Fig. 3** zeigt einen Feineinschnitt 2, dessen erster Abschnitt 5 bis zum Feineinschnittgrund 8 in radialer Richtung rR verläuft. Der dritte Abschnitt 7 weist einen abweichenden Tiefenverlauf auf. Der Tiefenverlauf entspricht zunächst dem des Neuzustandes. Ab einer Profiltiefe wtd des Feineinschnittes 2 von 3 mm bis 0,4 x td, wobei td die maximale Profiltiefe ist, weicht die Geometrie von der des Neuzustandes ab und nimmt einen multiradialen Verlauf. Der erste Abschnitt 5 und der dritte Abschnitt 7 sind im Feineinschnittgrund 8 auf einer gemeinsamen Gerade angeordnet.

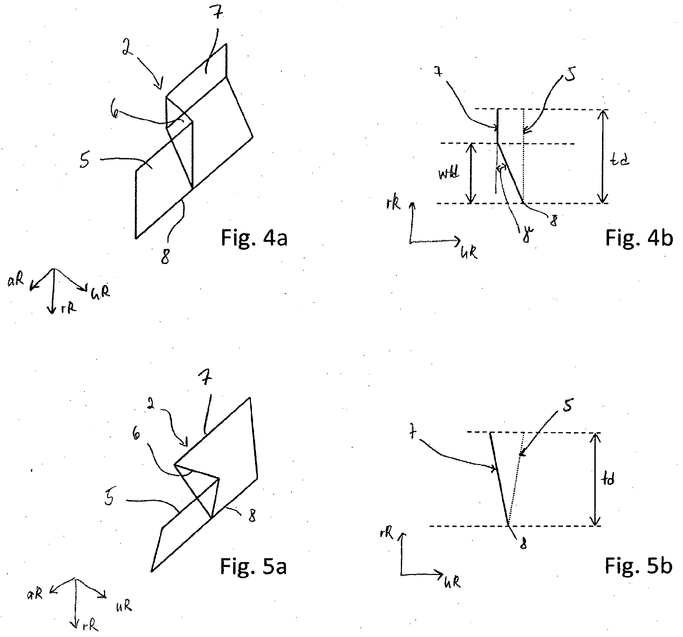

Die **Fig. 4** zeigt einen Feineinschnitt 2, dessen erster Abschnitt 5 bis zum Feineinschnittgrund 8 in radialer Richtung rR verläuft. Der dritte Abschnitt 7 weist einen abweichenden Tiefenverlauf auf. Der Tiefenverlauf entspricht zunächst dem des Neuzustandes. Ab einer Profiltiefe wtd des Feineinschnittes von 3 mm bis 0,4 x td, wobei td die maximale Profiltiefe ist, weicht die Geometrie von der des Neuzustandes ab und verläuft als Gerade, die einen Winkel γ von 0 bis 45° mit der radialen Richtung einschließt, vorzugsweise in einer Art, dass die Gerade zwischen dem ersten Abschnitt 5 und dem dritten Abschnitt 7 des Feineinschnittes liegt. Der erste Abschnitt 5 und der dritte Abschnitt 7 sind im Feineinschnittgrund 8 auf einer gemeinsamen Gerade angeordnet.

Die **Fig. 5** zeigt einen Feineinschnitt 2, dessen erster Abschnitt 5 und dessen dritter Abschnitt 7 im Tiefenverlauf in radialer Richtung rR als Gerade aufeinander zugeneigt verlaufend angeordnet sind und im Feineinschnittgrund 8 auf einer gemeinsamen Gerade angeordnet sind und dort enden.

### Bezugszeichenliste (Teil der Beschreibung)

- 1: Laufstreifenprofil
- 2: Feineinschnitt
- 3: Profilband
- 4: Umfangsrille
- 5: erster Abschnitt
- 6: zweiter Abschnitt
- 7: dritter Abschnitt
- 8: Feineinschnittgrund
- 9: Profilbandabschnitt

- rR: radiale Richtung
- aR: axiale Richtung
- uR: Umfangsrichtung

## Patentansprüche

1. Laufstreifenprofil (1) eines Fahrzeugreifens, welches ein über den Umfang des Laufstreifens umlaufendes Profilband (3) mit Feineinschnitten (2) aufweist, wobei der Feineinschnitt (2) das Profilband (3) in axialer Richtung (aR) vollständig durchquert und wobei der Feineinschnitt (2) in Aufsicht aus mehreren Abschnitten(5, 6, 7) besteht, welche winklig zueinander angeordnet sind, wobei der Feineinschnitt (2) in Aufsicht aus drei Abschnitten (5, 6, 7) besteht, welche im Neuzustand derart zueinander angeordnet sind, dass der Feineinschnitt (2) in etwa eine Z-Form aufweist, wobei der erste Abschnitt (5) und der dritte Abschnitt (7) die beiden äußeren Abschnitte des Feineinschnittes (2) bilden und in etwa in axialer Richtung (aR) angeordnet sind sowie wobei der zweite Abschnitt (6) den mittigen Abschnitt des Feineinschnittes (2) bildet, **dadurch gekennzeichnet, dass** der zweite Abschnitt in etwa in Umfangsrichtung (uR) angeordnet ist und
dass die Geometrie des Feineinschnittes (2) ab einer Profiltiefe von 3 mm bis 0,4 x td von der Geometrie des Neuzustandes abweicht, wobei td die maximale Profiltiefe ist, indem der erste und/oder der dritte Abschnitt (5, 7) einen von der radialen Richtung (rR) abweichenden Tiefenverlauf aufweisen und in Umfangsrichtung (uR) nach vorn oder in Umfangsrichtung (uR) nach hinten verlaufend angeordnet sind, so dass der erste Abschnitt (5) und der dritte Abschnitt (7) im Feineinschnittgrund (8) auf einer gemeinsamen Gerade angeordnet sind.

2. Laufstreifenprofil nach Anspruch 1,
**dadurch gekennzeichnet, dass** im Neuzustand der erste Abschnitt (5) und der dritte Abschnitt (7) je einen Winkel β von 5° bis 35° mit der axialen Richtung (aR) einschließen und dass der zweite Abschnitt (6) einen Winkel α von -10° bis 10° mit der Umfangsrichtung (uR) einschließt.

3. Laufstreifenprofil nach Anspruch 1 oder 2, **dadurch gekennzeichnet, dass** der Feineinschnitt (2) eine Breite von 0,5mm bis 1,5mm aufweist.

4. Laufstreifenprofil nach einem oder mehreren der vorangehenden Ansprüche, **dadurch gekennzeichnet, dass** der erste Abschnitt (5) und der dritte Abschnitt (7) gleich lang ausgebildet sind.

5. Laufstreifenprofil nach einem oder mehreren der vorangehenden Ansprüche, **dadurch gekennzeichnet, dass** der erste und/ oder der dritte Abschnitt (5, 7) in Änderung der Geometrie des Neuzustandes -im Querschnitt des Feineinschnittes betrachtet- einen Verlauf in Form einer Gerade aufweist.

6. Laufstreifenprofil nach einem oder mehreren der vorangehenden Ansprüche 1 - 4,
**dadurch gekennzeichnet, dass** der erste und/ oder der dritte Abschnitt (5, 7) in Änderung der Geometrie des Neuzustandes -im Querschnitt des Feineinschnittes betrachtet- einen bogenförmigen, vorzugsweise mulitradialen Verlauf aufweist.

7. Fahrzeugluftreifen, **dadurch gekennzeichnet, dass** dieser ein Laufstreifenprofil (1) gemäß einer oder mehrerer der vorangehenden Ansprüche aufweist.

8. Fahrzeugluftreifen nach Anspruch 7, **dadurch gekennzeichnet dass** dieser ein Nutzfahrzeugluftreifen ist.

## Claims

1. Tread profile (1) of a vehicle tyre that has running around the circumference of the tread a profile strip (3) with sipes (2), the sipe (2) crossing completely through the profile strip (3) in the axial direction (aR) and the sipe (2) consisting in plan view of multiple portions (5, 6 7), which are arranged at an angle to one another, the sipe (2) consisting in plan view of three portions (5, 6, 7), which in the new state are arranged in relation to one another in such a way that the sipe (2) has an approximately Z shape, the first portion (5) and the third portion (7) forming the two outer portions of the sipe (2) and being arranged approximately in the axial direction (aR), and the second portion (6) forming the middle portion of the sipe (2), **characterized in that** the second portion is arranged approximately in the circumferential direction (uR) and **in that**, from a profile depth of 3 mm to 0.4 x td, the geometry of the sipe (2) differs from the geometry of the new state, where td is the maximum profile depth, by the first and/or third portion (5, 7) having a depth progression deviating from the radial direction (rR) and being arranged running forwards in the circumferential direction (uR) or rearwards in the circumferential direction (uR), so that the first portion (5) and the third portion (7) are arranged on a common straight line in the sipe base (8).

2. Tread profile according to Claim 1, **characterized in that**, in the new state, the first portion (5) and the third portion (7) each form an included angle β with the axial direction (aR) of 5° to 35° and **in that** the second portion (6) forms an included angle α with the circumferential direction (uR) of -10° to 10°.

3. Tread profile according to Claim 1 or 2, **characterized in that** the sipe (2) has a width of 0.5 mm to 1.5 mm.

4. Tread profile according to one or more of the preceding claims, **characterized in that** the first portion (5) and the third portion (7) are formed with the same length.

5. Tread profile according to one or more of the preceding claims, **characterized in that** the first and/or the third portion (5, 7) has by way of modification of the geometry of the new state - seen in the cross section of the sipe - a progression in the form of a straight line.

6. Tread profile according to one or more of the preceding Claims 1-4, **characterized in that** the first and/or the third portion (5, 7) has by way of modification of the geometry of the new state - seen in the cross section of the sipe - an arcuate, preferably multiradial progression.

7. Pneumatic vehicle tyre, **characterized in that** it has a tread profile (1) according to one or more of the preceding claims.

8. Pneumatic vehicle tyre according to Claim 7, **characterized in that** it is a pneumatic tyre for a commercial vehicle.

## Revendications

1. Profil de bande de roulement (1) d'un pneu de véhicule, qui présente une bande de profil (3) s'étendant sur le pourtour de la périphérie de la bande de roulement, avec de fines entailles (2), la fine entaille (2) traversant complètement la bande de profil (3) dans la direction axiale (aR) et la fine entaille (2) se composant, en vue de dessus, de plusieurs sections (5, 6, 7) qui sont disposées de manière angulaire les unes par rapport aux autres, la fine entaille (2) se composant, en vue de dessus, de trois sections (5, 6, 7) qui sont disposées les unes par rapport aux autres à l'état neuf de telle sorte que la fine entaille (2) présente approximativement une forme en Z, la première section (5) et la troisième section (7) formant les deux sections extérieures de la fine entaille (2) et étant disposées approximativement dans la direction axiale (aR), et la deuxième section (6) formant la section centrale de la fine entaille (2), **caractérisé en ce que** la deuxième section est disposée approximativement dans la direction périphérique (uR) et **en ce que** la géométrie de la fine entaille (2) s'écarte de la géométrie à l'état neuf à partir d'une profondeur de profil de 3 mm à 0,4 x td, td étant la profondeur de profil maximale, du fait que la première et/ou la troisième section (5, 7) présente(nt) une étendue en profondeur s'écartant de la direction radiale (rR) et est/sont disposée(s) de manière à s'étendre vers l'avant dans la direction périphérique (uR) ou vers l'arrière dans la direction périphérique (uR), de telle sorte que la première section (5) et la troisième section (7) soient disposées dans le fond de la fine entaille (8) sur une droite commune.

2. Profil de bande de roulement selon la revendication 1,
**caractérisé en ce qu'**à l'état neuf, la première section (5) et la troisième section (7) forment chacune un angle β de 5° à 35° avec la direction axiale (aR) et **en ce que** la deuxième section (6) forme un angle α de -10° 0 à 10° avec la direction périphérique (uR).

3. Profil de bande de roulement selon la revendication 1 ou 2, **caractérisé en ce que** la fine entaille (2) présente une largeur de 0,5 mm à 1,5 mm.

4. Profil de bande de roulement selon l'une quelconque ou plusieurs des revendications précédentes, **caractérisé en ce que** la première section (5) et la troisième section (7) sont réalisées de même longueur.

5. Profil de bande de roulement selon l'une quelconque ou plusieurs des revendications précédentes, **caractérisé en ce que** la première et/ou la troisième section (5, 7) présente(nt), contrairement à la géométrie à l'état neuf - vu en coupe transversale à travers la fine entaille - une allure en forme de droite.

6. Profil de bande de roulement selon l'une quelconque ou plusieurs des revendications précédentes 1 à 4, **caractérisé en ce que** la première et/ou la troisième section (5, 7) présente(nt), contrairement à la géométrie à l'état neuf - vu en coupe transversale à travers la fine entaille - une allure de forme courbe, de préférence multiradiale.

7. Pneu de véhicule, **caractérisé en ce que** celui-ci présente un profil de bande de roulement (1) selon l'une quelconque ou plusieurs des revendications précédentes.

8. Pneu de véhicule selon la revendication 7,
**caractérisé en ce que** celui-ci est un pneu de véhicule utilitaire.
